# EUROPÄISCHE PATENTSCHRIFT

(11) **EP 0 898 053 B1**
(45) Veröffentlichungstag und Bekanntmachung des Hinweises auf die Patenterteilung: **12.11.2003**
(21) Anmeldenummer: 98114727.5
(22) Anmeldetag: 05.08.1998
(51) Int. Cl.: F01D 5/28, B29C 70/22

(54) **Pumpenschieber aus verschleissfestem flächigem Material**
Pump vane made of wear-resistant sheet material
Aube pour pompe fabriquée en un materiau en feuille résistant à l'usure

(30) Priorität: 15.08.1997 DE 29714620 U
(43) Veröffentlichungstag der Anmeldung: 24.02.1999
(73) Patentinhaber: Isola Composites GmbH, 86199 Augsburg (DE)
(72) Erfinder: Menhofer, Peter, 87719 Mindelheim (DE); Wagner, Richard, 86830 Schwabmünchen (DE); Lahner, Stefan, Dr., 86381 Krumbach (DE)
(74) Vertreter: Cohausz & Florack

(56) Entgegenhaltungen:
- US-A- 4 548 678
- US-A- 5 234 752
- US-A- 5 447 411

## Beschreibung

Die Erfindung betrifft einen verschleißfesten Pumpenschieber, der durch Verpressen unter hohen Temperaturen einer Anordnung von übereinander gelagerten Schichten aus Geweben, welche mit einem wärmehärtenden Harz imprägniert sind, erhältlich ist.

Gegenstände dieser Art sind bekannt und werden beispielsweise als diverse Maschinenbauteile eingesetzt.

So beschreibt die US 5 447 411 ein Schutzbehältersystem für Ventilatorenblätter eines Turboventilators, das eine Anordnung aus mehreren Lagen harten Materials, einem elastischen Material und einer Fasergewebeschicht mit dazwischen gelagerten Bindemittelschichten umfasst.
Das Bindemittel durchdringt die Gewebeschicht nicht.

Die US 4 548 678 beschreibt einen verschleißfesten Pumpenschieber aus einem Vlies, das Graphitteilchen im Gemisch mit vliesbildenden Aramidfasern enthält, wobei Teilchen und Fasern mit einem organischen Bindemittel verbunden sind.

In der EP 470 155 B1 wird ein gattungsgemäßes Material beschrieben, zu dessen Herstellung ein Garn eingesetzt wird, welches einen Kern aus Glasfaser mit einer Oberfläche aus Aramidfaser und Viskosefaser, enthält, wobei die Aramidfaser nicht mehr als 40 Gew.% des zur Gewebeherstellung verwendeten Garns bildet. Ferner ist ein gattungsgemäßes Material bekannt, zu dessen Herstellung ein Garn eingesetzt wird, das aus einer Glasfaserseele besteht und sowohl mit einer Aramidfaser als auch einer Carbonfaser umwickelt ist.

Obwohl Pumpenschieber aus diesem Gewebe grundsätzlich geeignet erscheinen, traten dennoch Schwierigkeiten wegen zu starker Geräuschentwicklung auf. Ferner weisen die bekannten Pumpenschieber einen hohen Verschleiß auf.

Der Erfindung liegt somit die Aufgabe zugrunde, flächige Materialien bereitzustellen, die die zuvor genannten Nachteile bei der Verwendung als Pumpenschieber nicht aufweisen.

Diese Aufgabe wurde überraschend gelöst durch einen verschleißfesten Pumpenschieber, der durch Verpressen unter Hitze einer Anordnung von übereinander gelagerten Schichten aus Geweben, welche mit einem wärmehärtenden Harz imprägniert sind, erhältlich ist, wobei das Garn des Gewebes aus Aramid-Stapelfasern, Flachsfasern und/oder Hanffasern besteht.

Die zur Herstellung der Gewebe eingesetzten Garne werden vorzugsweise aus sogenannten Stapelfasern hergestellt. Stapelfasern sind in Stücke bestimmter Länge zerschnittene oder zerrissene Fäden. Als Ausgangsmaterial zur Herstellung der erfindungsgemäß verwendeten Gewebe können deshalb Garne eingesetzt werden, die durch das Recycling von Geweben oder Garnen erhalten wurden.

Zur Herstellung des erfindungsgemäßen flächigen Materials werden mit einem wärmehärtbaren Harz getränkte Gewebe in mehreren Schichten übereinander angeordnet, unter Wärmeeinwirkung und Druck das Harz gehärtet und schließlich das gehärtete flächige Material auf die gewünschte Größe zurechtgeschnitten.

Als wärmehärtbare Harze können beispielsweise Phenolharze wie Phenol/Formaldehyd-Harze eingesetzt werden. Weitere Stoffe im Hinblick auf die spätere Verwendung des Produkts, beispielsweise Mittel zur Verringerung der Reibung, können dem Harz zugesetzt werden.

Der erfindungsgemäße Pumpenschieber ist verschleißarm und korrosionsfest und erlaubt einen geräuscharmen Lauf der Pumpe. Insbesondere vorteilhaft ist die mechanische Festigkeit im Hinblick auf die Biegebruch-Dehnung und die Abriebfestigkeit. Ferner weist der erfindungsgemäße Pumpenschieber im Vergleich zu herkömmlichen, mit Glasfasern hergestellten Pumpenschiebern ein geringeres Gewicht auf, was eine Leistungsersparnis der Pumpen zur Folge hat.

### Beispiel

Ein Gewebe aus Aramidstapelfasern mit einem Flächengewicht von 600 g/m² wird mit einer Phenolharzlösung so imprägniert, so daß nach der Trocknung bei 160°C ein flächiges Zwischenprodukt mit einem Flächengewicht von 1600 g/m² entsteht.

Zur Herstellung eines 10,0 mm dicken Materials werden 10 Lagen des flächigen Zwischenproduktes zwischen zwei 3,0 mm dicke Stahlbleche gelegt und in einer Ein- oder Mehretagenpresse bei einer Temperatur von 165°C und einem spezifischen Druck von 65 bar verpreßt. Nach 90 Minuten Heizzeit wird das erfindungsgemäße flächige Material auf Raumtemperatur abgekühlt und aus den Stahlblechen entnommen.

## Patentansprüche

1. Verschleißfester Pumpenschieber, der durch Erhitzen einer Anordnung von übereinander gelagerten Schichten aus Geweben, welche mit einem wärmehärtenden Harz imprägniert sind, unter Druck erhältlich ist, wobei das Garn zur Herstellung der Gewebe aus Aramid-Stapelfasern, Flachsfasern und/oder Hanffasern besteht.

## Claims

1. Wear-resistant pump vane manufactured by heating layers of woven fabrics that are impregnated with a thermosetting resin and arranged on top of one another under pressure, wherein the yarn for manufacturing the woven fabric consists of aramide staple fibers, flax fibers and/or hemp fibers.

## Revendications

1. Palette de pompe, résistance à l'usure, obtenue par chauffage sous pression d'un agencement de couches superposées de tissus qui sont imprégnés d'une résine thermodurcissable, dans laquelle les fibres pour la fabrication des tissus sont des fibres artificielles d'aramide, des fibres de lin et/ou des fibres de chanvre.
